# EUROPÄISCHE PATENTANMELDUNG

(11) **EP 1 369 939 A2**
(43) Veröffentlichungstag der Anmeldung: **10.12.2003**
(21) Anmeldenummer: 03010653.8
(22) Anmeldetag: 13.05.2003
(51) Int. Cl.: H01M 2/08, H01M 10/04, H01M 2/26

(54) **Galvanisches Element**

(30) Priorität: 06.06.2002 DE 10225041
(71) Anmelder: VARTA Microbattery GmbH, 30419 Hannover (DE)
(72) Erfinder: Wöhrle, Thomas, Dr., 73479 Ellwangen (DE); Gaugler, Winfried, 73479 Ellwangen (DE); Barenthin, Wolf-Ulrich, 73479 Röhlingen (DE); Stelzig, Heinrich, 73494 Rosenberg (DE); Ilic, Dejan, Dr., 73479 Ellwangen (DE)
(74) Vertreter: Patentanwälte Ruff, Wilhelm, Beier, Dauster & Partner

(57) **Zusammenfassung**

Bei einem galvanischen Element, welches in einem Gehäuse aus innenseitig mit Isoliermaterial beschichteter Metallfolie einen Stapel aus mehreren Einzelzellen mit positiven und negativen Elektroden (2, 3) sowie Separatoren (4) enthält, sind die Ableiterfahnen jeder Polarität (8) mit einem Kollektor (5) verschweißt. Der Kollektor bildet den äußeren elektrischen Anschluss des galvanischen Elements. Die zur Gehäuseinnenwand (1) weisenden Bereiche der Ableiterfahnen (8) und des angeschweißten Kollektors (5), die zur Gehäusewand benachbart sind, sind mit einem Kunststofffilm (6) abgedeckt. Der Kunststofffilm (6) ist mit dem Ableiter und dem Kollektor mittels einer Silikonklebeschicht verklebt und besteht beispielsweise aus Polyimid.

## Beschreibung

Gegenstand der Erfindung ist ein galvanisches Element gemäß dem Oberbegriff des Anspruchs 1, welches insbesondere in einem Gehäuse aus innenseitig mit Isoliermaterial beschichteter Verbundfolie einen Stapel aus mehreren Einzelzellen mit positiven und negativen Elektroden sowie Separatoren enthält.

Wieder aufladbare galvanische Elemente, insbesondere Lithiumzellen, enthalten in vielen Fällen einen Zellenstapel, der aus mehreren Einzelzellen oder Einzelelementen besteht. Die Einzelzellen, aus denen ein solcher Zellenstapel zusammengesetzt ist, sind ein Laminat, das aus Ableitern, aktivem Elektrodenfilm und Separator erzeugt ist. Derartige Laminate aus fest verbundenen Einzelteilen werden insbesondere als sogenannte Bizellen mit den möglichen Abfolgen negative Elektrode / Separator / positive Elektrode / Separator / negative Elektrode oder positive Elektrode / Separator / negative Elektrode / Separator / positive Elektrode hergestellt.

In der US-PS 5460904 sind Verfahren zur Herstellung von wiederaufladbaren Lithium/lonenbatterien beschrieben. Bei diesen Verfahren werden aktive Materialien und Zusätze wie gegebenenfalls Leitfähigkeitsverbesserer in den Elektroden oder Stabilisatoren im Separator, ein spezielles Copolymer, Polyvinylidendifluorid-Hexafluorpropylen (PVDF-HFP) sowie Anteile eines Weichmachers, in vielen Fällen Dibuthylphthalat (DBP), nach Hinzugabe von Aceton zum Lösen des Copolymers gemischt und zu einer Folie ausgezogen. Die so gebildeten Elektrodenfolien und Separatorfolien werden in mehreren Laminationsprozessen zu den vorgenannten Bizellen verarbeitet. Mehrere Bizellen werden zu einem Stapel aufgeschichtet, der nach Einlegen in einen Behälter aus beispielsweise tiefgezogener Aluminiumverbundfolie, Befüllen mit Elektrolyt, Versiegeln mit einem Deckel, Formation und Endverschluss zu einer fertigen Batterie verarbeitet wird. Die Elektroden jeder Polarität sind mit Ableiterfahnen versehen, die mit einem Kollektor verschweißt werden, der durch das Gehäuse nach außen geführt ist. Um Raum zu sparen und eine hohe Energiedichte des galvanischen Elements zu erhalten, sind die Ableiter eng zusammengefaltet. Es hat sich gezeigt, dass bei solchen Zellen häufig Kurzschlüsse durch Kontakt zwischen Ableiterfahnen und dem Metall der äußeren Aluminiumverbundfolie auftreten.

Der Erfindung liegt die Aufgabe zugrunde, die Kurzschlusssicherheit solcher galvanischen Elemente zu erhöhen.

Diese Aufgabe wird bei einem galvanischen Element der eingangs genannten Art durch die Merkmale des Anspruchs 1 gelöst. In den Unteransprüchen sind vorteilhafte Ausgestaltungen der Erfindung angegeben. Der Wortlaut der Ansprüche wird durch ausdrückliche Bezugnahme zum Inhalt der Beschreibung gemacht.

Bei einem erfindungsgemäßen galvanischen Element sind die Ableiter-Anschlüsse jeder Polarität mit einem Kollektor verschweißt, der den äußeren elektrischen Anschluss der Zelle bildet. Die zur Innenseite des Gehäuses weisenden Bereiche der an die Gehäusewand angrenzenden Ableiterfahnen und des Kollektors sind mit einer Kunststoffschicht oder einem Kunststofffilm abgedeckt. Ein Kunststofffilm kann mit dem Ableiter und dem Kollektor mittels einer Silikonschicht verklebt sein. Mindestens eine der Elektroden ist bevorzugt eine Lithium-interkalierende Elektrode.

Die Kunststoffschicht kann aus Polyethylen, Polypropylen, Polyimid, Polyethylenterephthalat, PVC oder PDFE bestehen. Die Dicke der Kunststoffschicht kann bei 10 µm bis 100 µm liegen, vorteilhaft 20 µm bis 60 µm oder ca. 40 µm.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

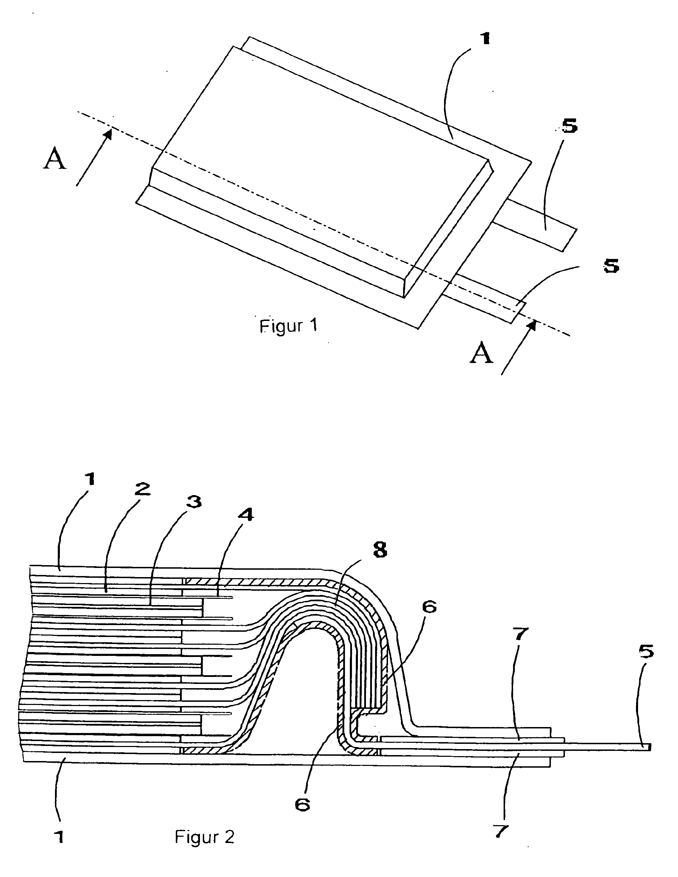

Im Folgenden ist der Gegenstand der Erfindung anhand der schematischen Figuren 1 und 2 näher erläutert.
Figur 1 zeigt eine Flachzelle (Softpack) der eingangs genannten Art.
Figur 2 zeigt in einem Teilquerschnitt vergrößert den positiven Ableiterbereich der Batterie gemäß Figur 1 längs der Linie AA.

Die Batterie 1 enthält beispielsweise sieben bis acht Einzelzellen in einem Gehäuse aus Verbundfolie 1, beispielsweise Aluminiumverbundfolie. Die Verbundfolie 1 ist zumindest auf der zur Innenseite der Zelle weisenden Oberfläche mit einem Kunststoffüberzug als Isolation versehen.

Die Einzelzellen bestehen aus positiven Elektroden 2, negativen Elektroden 3 und Separatoren 4. Die Elektroden 2 und 3 besitzen jeweils Ableitfahnen 8, wobei in der Figur die positiven Ableitfahnen 8 dargestellt sind. Diese sind mit einem Kollektor 5 aus dem gleichen Material wie die Ableitfahnen 8 verbunden. Bei positiven Elektroden ist dies Aluminium, bei negativen Elektroden Kupfer.

Um eine hohe Raumausnutzung und eine entsprechend hohe Energiedichte zu erhalten, sind die Ableiterfahnen, wie in der Figur 2 gezeigt, eng zusammengefaltet. Dabei treten erhebliche Probleme auf, insbesondere dann, wenn die Ableiterfahnen 8 aus Streckmetall bestehen, beispielsweise Aluminiumstreckmetall. Einzelne Stege oder Drähtchen des Streckmetalls können beim Ausstanzen der Elektrode entstehen. Während des Versiegelns der Zelle treten hohe Drücke und Temperaturen auf. Diese Stege oder Drähtchen können während des Versiegelns der Zelle die innere Siegelschicht der Verbundfolie 1, die aus Polypropylen oder Ethylen-Acrylsäure-Copolymer bestehen kann, durchstechen. Dabei können sie das Metall der Verbundfolie berühren und damit einen Kurzschluss herbeiführen. Auch Knicke der Elektrodenableiter 8 sowie der Bereich, in dem Ableiter 8 und Kollektor 5 verschweißt sind, können während des Siegelungsverfahrens die im Versiegelungsbereich angeordnete Siegelfolie 7 durchstechen. Die Siegelfolie 7 kann beispielsweise aus Polypropylen bestehen. Dadurch können Verbindungen von einem Pol zum Gehäuse oder beidseitige Verbindungen der Pole zum Gehäuse entstehen, die insbesondere im letzten Fall zu einem inneren Kurzschluss führen.

Erfindungsgemäß sind daher der im Inneren des galvanischen Elements liegende Bereich derjenigen Ableiter 8, die der Gehäusewand 1 benachbart sind und der Bereich der Verschweißung mit dem Kollektor 5 durch einen hoch schmelzenden Kunststofffilm 6 abgedeckt. Der Kunststofffilm 6 ist mit dem Ableiter bzw. Kollektorbereich verklebt. Ein dazu geeigneter Kunststofffilm kann aus Polyethylen, Polypropylen, Polyimid, Polyethylenterephthalat, PVC oder PDFE bestehen. Bevorzugt wird als Kunststoffmaterial Polyimid verwendet. Der Kunststofffilm 6, der beispielsweise eine Dicke von 20 bis 60 µm aufweisen kann, ist mit einem Silikonmaterial beschichtet. Das Silikonmaterial bildet eine Adhäsionsschicht mit hoher Klebekraft und ist, ebenso wie das Material des Kunststofffilms, chemisch kompatibel und inert gegen die Bestandteile der Zelle, insbesondere gegen organische Carbonate und Lithiumleitsalze wie LiPF6 oder LiBF4. Durch die erfindungsgemäße Abdeckung der Ableiter- und Kollektorbereiche innerhalb der Zelle wird bei geringem Materialeinsatz, der Gewicht und Volumen der Zelle nur wenig beeinflusst, eine hohe Sicherheit gegen Kurz- und Mantelschlüsse bei der Herstellung von Lithium/Polymerbatterien erreicht. Die spezifischen Energiedichten der Zelle bleiben praktisch unverändert.

## Patentansprüche

1. Galvanisches Element mit einem Gehäuse, wobei:
- das Gehäuse eine Gehäusewand (1) aufweist
- die Gehäusewand (1) eine Metallfolie aufweist,
- die Metallfolie auf der Innenseite mit Isoliermaterial beschichtet ist,
- das galvanische Element einen Stapel aus mehreren Einzelzellen mit positiven und negativen Elektroden (2, 3) sowie Separatoren (4) in dem Gehäuse enthält,
- die Elektroden Ableiter-Anschlüsse (8) aufweisen,
- das galvanische Element Kollektor-Anschlüsse (5) als elektrischen Anschluss nach außen aufweist,
**dadurch gekennzeichnet, dass**
- jeweils Ableiter-Anschlüsse (8) gleicher Polarität mit einem der Kollektor-Anschlüsse (5) verbunden sind,
- sowohl die Ableiter-Anschlüsse (8), welche benachbart sind zu der Gehäusewand (1), als auch der damit verbundene Kollektor-Anschluss (5) Bereiche aufweisen, die zu einer Innenseite (1) der Gehäusewand weisen und mit einer Kunststoffschicht (6) abgedeckt sind.

2. Galvanisches Element nach Anspruch 1, **dadurch gekennzeichnet, dass** die Kunststoffschicht (6) ein Kunststofffilm ist.

3. Galvanisches Element nach Anspruch 1 oder 2, **dadurch gekennzeichnet, dass** mindestens eine der Elektroden (2, 3) eine Lithium-interkalierende Elektrode ist.

4. Galvanisches Element nach einem der vorhergehenden Ansprüche, **dadurch gekennzeichnet, dass** die Kunststoffschicht (6) mit dem Ableiter-Anschluss (8) und dem Kollektor-Anschluss (5) verklebt ist.

5. Galvanisches Element nach Anspruch 4, **dadurch gekennzeichnet, dass** die Kunststoffschicht (6) mit dem Ableiter-Anschlss (8) und dem Kollektor-Anschluss (5) mittels einer Silikonklebeschicht verklebt ist.

6. Galvanisches Element nach einem der vorhergehenden Ansprüche, **dadurch gekennzeichnet, dass** die Kunststoffschicht (6) aus Polyimid besteht.

7. Galvanisches Element nach einem der vorhergehenden Ansprüche, **dadurch gekennzeichnet, dass** die Kunststoffschicht (6) eine Dicke von 20 µm bis 60 µm aufweist.
